# EUROPÄISCHE PATENTSCHRIFT

(11) **EP 0 615 180 B1**
(45) Veröffentlichungstag und Bekanntmachung des Hinweises auf die Patenterteilung: **11.06.1997**
(21) Anmeldenummer: 93114744.1
(22) Anmeldetag: 14.09.1993
(51) Int. Cl.: G05B 23/02, G05B 9/03

(54) **Elektrische Überwachungsanordnung**
Electrical monitoring device
Dispositif de surveillance électrique

(30) Priorität: 08.03.1993 CH 693/93
(43) Veröffentlichungstag der Anmeldung: 14.09.1994
(73) Patentinhaber: Landis & Gyr Technology Innovation AG, 6301 Zug (CH)
(72) Erfinder: Lelle, Josef, Dipl. Ing. (FH), D-7570 Baden-Baden (DE); Ulrich, Gerhard, Ing., CH-5643 Sins (CH)
(74) Vertreter: Müller, Hans-Jürgen, Dipl.-Ing.

(56) Entgegenhaltungen:
- EP-A- 0 093 276
- EP-A- 0 186 612
- DE-A- 3 424 247
- DE-A- 3 633 953
- US-A- 3 709 626
- US-A- 4 587 470

## Beschreibung

Die Erfindung bezieht sich auf eine elektrische Überwachungsanordnung der im Oberbegriff des Anspruchs 1 genannten Gattung sowie auf eine Verwendung derselben bei einer Steuereinrichtung für Brenner für Heizungsanlagen oder dergl.

Eine derartige Steuereinrichtung ist bereits bekannt (Firmenschrift L... Feuerungsautomaten für Ö1- und Gasbrenner der Firma Landis & Gyr). Sofern der Wunsch nach kleinen Kompaktbrennern besteht, wird für das Gebläse und die Ölpumpe das gleiche Antriebsaggregat angewendet, so daß die Welle des Antriebsmotors sowohl die Ölpumpe als auch das Gebläse antreibt. Damit das Verhältnis zwischen der zu fördernden Luftmenge und der zu fördernden Ölmenge steuerbar ist, wird eine zusätzlishe Luftklappe und/oder ein zusätzliches Steuerorgan für die Ölzufuhr eingebaut.

Überwachungseinrichtungen der eingangs genannten Gattung haben z.B. den Zweck, die Drehzahl eines Antriebsaggregats, z.B. Motors, festzustellen und anzuzeigen (Meßanordnung) oder mit einem SOLL-Wert zu vergleichen, um Abweichungen von diesem zur Steuerung der Drehzahl anzuwenden (Regelanordnung).

Aus der US-3 709 626 ist eine Regeleinrichtung bekannt, die zwei vollständige Regelkreise umfaßt, von denen der eine digital, der andere analog arbeitet. Der analoge Regelkreis dient als Reserve und wird nur bei Ausfall des digitalen Regelkreises infolge Fehlfunktion des Computers aktiviert. Dies erhöht zwar die Verfügbarkeit der Regeleinrichtung, kann aber während des Betriebes eine die Funktionssicherheit des digitalen Regelkreises übersteigende Sicherheit nicht gewährleisten. Auch beinhaltet diese Regeleinrichtung einen hohen apparativen Aufwand, der die Funktionssicherheit zusätzlich reduziert.

Der Erfindung liegt die Aufgabe zugrunde, eine Überwachungseinrichtung der eingangs genannten Gattung dahingehend zu verbessern, daß die Funktionssicherheit verbessert wird.

Die Erfindung ist im Anspruch 1 beansprucht und in Unteransprüchen sowie der folgenden Beschreibung sind weitere Ausbildungen derselben beansprucht und beschrieben.

Nach der Erfindung wird die Sicherheit z.B. bei der Regelung bei Anwendung von IST-Wert-Fühlern dadurch verbessert, daß der Signalweg von den IST-Wert-Fühlern zu einer entsprechenden Überwachungs- bzw. allgemein einer Auswerteeinrichtung in mindestens zwei parallele Signalwege aufgeteilt wird. Diese sind jedoch derart unterschiedlich ausgelegt, daß zwei unterschiedliche Signalarten vom betreffenden IST-Wert-Fühler zur zugehörigen Überwachungs- bzw. Auswerteeinrichtung gelangen. Mit anderen Worten: auf diesen parallelen Signalwegen findet eine unterschiedliche Signalverarbeitung statt.

Dabei empfiehlt es sich, auf dem einen Signalweg Digitalsignale und auf dem anderen Signalweg Analogsignale entlangzuführen, welche dann in der Auswerteeinrichtung gegenseitig überwacht bzw. so ausgewertet werden, daß zur Gewährleistung der erforderlichen Sicherheit Fehler sofort erkannt und abgestellt werden können. Fällt auf einem Signalweg ein z.B. elektronisches Bauelement aus, dann ist es höchst unwahrscheinlich, daß gleichzeitig die Funktion von Bauelementen auf dem anderen, parallelen Signalweg beeinträchtigt wird, sofern nicht z.B. durch Stromausfall die Gesamtanlage aussetzt, was durch die ohnehin vorgesehene Überwachung leicht feststellbar ist. Durch die Änderung in einem Signalweg stellt die Auswerteeinrichtung eine Diskrepanz der beiden Signale fest und es kann ein Alarm ausgelöst, die Anlage vorsorglich abgeschaltet oder sogleich ein Ersatz-Bauelement zur Wirkung gebracht werden.

Nach einer besonderen Ausbildung der Erfindung wird diese bei einer Steuereinrichtung für Brenner von Heizungsanlagen oder dergleichen angewendet. Dies ist deshalb wichtig, weil ein Fehler im Mischungsverhältnis zwischen Brennstoff und Luft zur Überschreitung von Zulassungs-Grenzwerten oder sogar zur Brennerinstabilität führen könnte. Bei fehlerhafter Redunanz muß abgegeschaltet werden, wenn weitere Fehler im verbleibenden Strompfad nicht mehr erkannt werden können. Der IST-Wert-Fühler fühlt die Drehzahl von Antriebsaggregaten für das Gebläse einerseits und die Ölpumpe andererseits ab. Diese werden dann insbesondere mit SOLL-Werten verglichen, und Abweichungen werden zur Beeinflussung einer Regelgröße verwendet, die wieder zur Erhöhung oder Verminderung der Drehzahl beitragen, so daß eine Regelung der Drehzahl stattfindet. Dabei empfiehlt es sich, die Steuerung der Antriebsaggregate in Abhängigkeit von den Soll-Wert-Abweichungen pulsweitenmoduliert vorzunehmen.

Die IST-Drehzahlen werden insbesondere mittels HALL-Sonden, abgefühlt und in Abhängigkeit von den Ausgangssignalen solcher als IST-Wert-Fühler dienenden Sensoren werden die Antriebsaggregate geregelt. Hierdurch kann gut für die gewünschte Sicherheit gesorgt werden.

Eine solche Steuereinrichtung ist optimal an verschiedene Brenner und andere Aggregate anpaßbar. Das Gebläse ist auch getrennt von der Ölpumpe hinsichtlich seiner Steuerleistung steuerbar bzw. regelbar. Bei entkoppeltem Antrieb kann das Ein- und/oder das Ausschalten von Gebläse und/oder Ölpumpe zu unterschiedlichen Zeitpunkten erfolgen, was Energie einsparen hilft und Verschleißerscheinungen reduziert. Beim Vorlüften (das Brennstoffventil ist noch geschlossen) muß die Ölpumpe noch gar nicht mitlaufen. Der Einschaltzeitpunkt derselben kann nach der jeweiligen Hochlaufzeit gewählt werden.

In der folgenden Beschreibung und anhand der Zeichung werden besonders bevorzugte Ausführungsbeispiele hierfür erörtert. Dabei zeigen:
- Fig. 1: ein schematisches Schaubild einer Ausbildungsform der Erfindung;
- Fig. 2: einen schematischen Schaltplan für die Aufteilung und getrennte Verarbeitung von von IST-Wert-Fülhlern bzw. -Sensoren gewonnenen Signalen;
- Fig. 3: die schematische zeitabhängige Darstellung zweier unterschiedlicher Signaltypen;
- Fig. 4: ein schematisches Schaubild einer Steuereinrichtung einer Heizungsanlage, bei der die Erfindung mit Vorteil anwendbar ist,
- Fig. 5: zwei Diagramme für digitale;
- Fig. 6: für analoge Drehzahl-IST-Wertverarbeitung und
- Fig. 7: idealisierte Signaldiagramme.

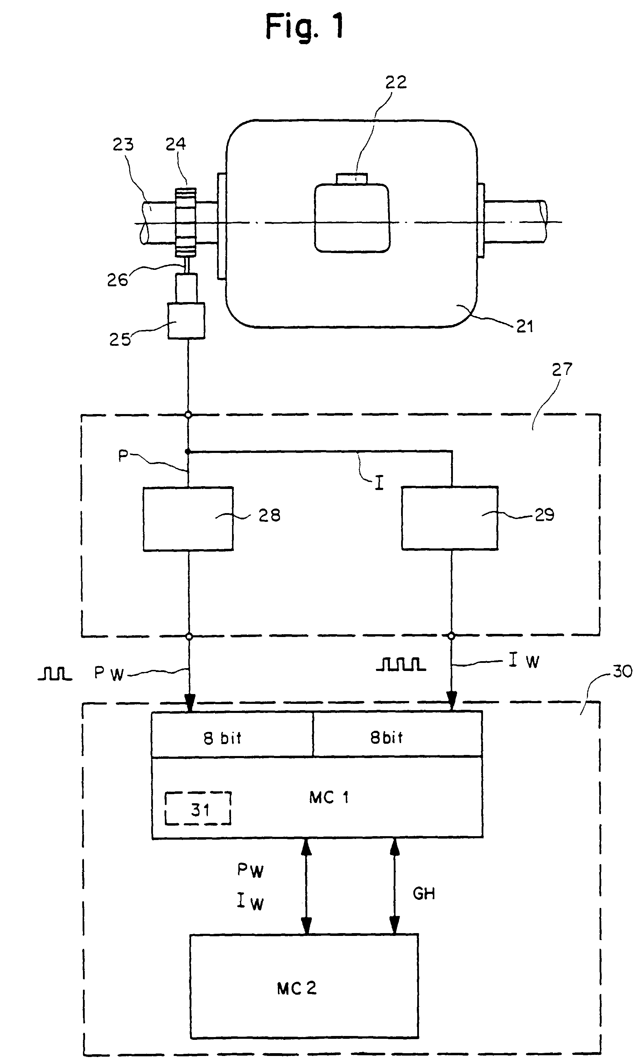

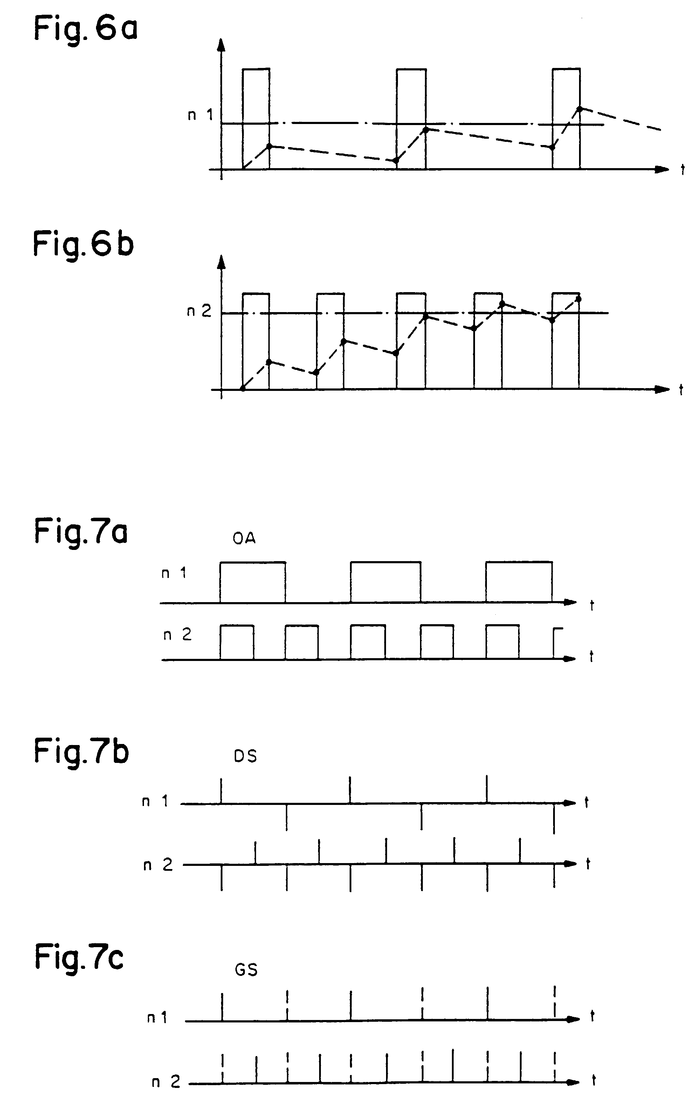

Gemäß Fig. 1 werden die IST-Werte der Drehzahl eines elektrischen Antriebsaggregats 21 ermittelt. Dieses Antriebsaggregat 21 ist z.B. ein 35 V-Gleichstrommotor, dem die Antriebsenergie über hier nicht gezeigte und an den Klemmenkasten 22 führende Leitungen zugeführt wird. Auf der Welle 23 befindet sich ein mit Lamellen versehener Ring 24, so daß die Drehzahl der Welle 23 dadurch feststellbar ist, daß der Abtaststrahl 26 des IST-Wert-Fühlers 25 beim Abtasten der dunkleren Lamellen bzw. der dazwischen befindlichen helleren Abschnitte jeweils impulsförmige Signale erzeugt, so daß für jeden Übergang von hell auf dunkel und umgekehrt, d.h. für jede Flanke des "Helligkeitssignals" ein Impuls konstanter Impulsbreite erzeugt wird. Die optische Abtastung erfolgt dadurch differenzierend. Die Häufigkeit der Impulse konstanter Impulsbreite pro Zeiteinheit ist ein Maß für die betreffende Drehzahl der Welle 23 z.B. gemäß Fig. 6.

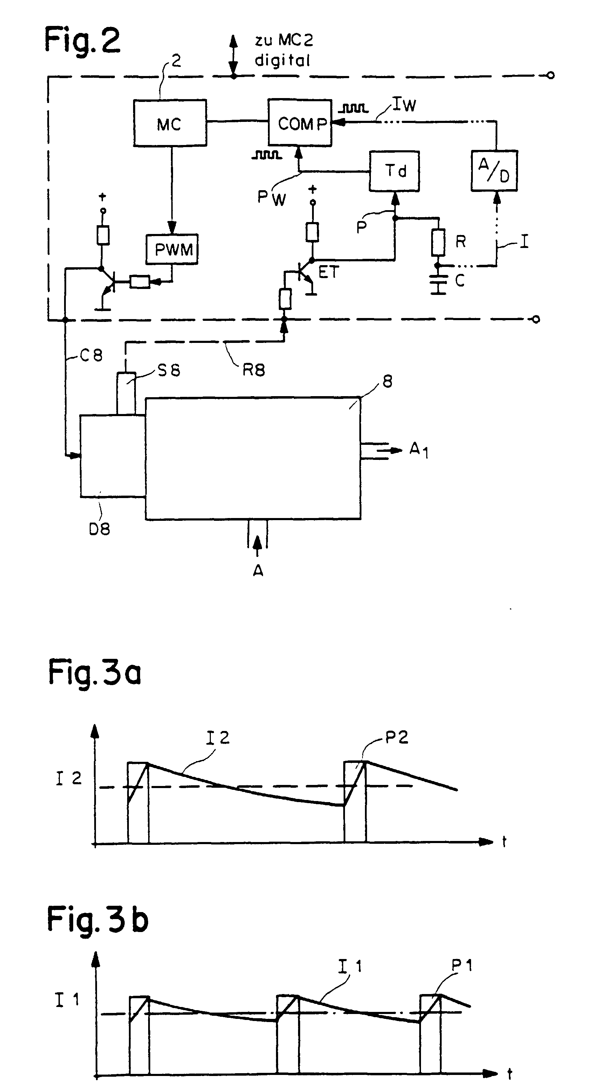

In den Weg vom IST-Wert-Fühler 25 zur Auswerteeinrichtung 30 sind üblicherweise bestimmte Daten-Verarbeitungsaggregate, wie das insbesondere als Zähler T (Fig. 2) ausgebildete Daten-Verarbeitungsaggregat 28, eingeschaltet, das sich in dem Signalweg P befindet. Würde dieses Daten-Verarbeitungsaggregat 28 seine Funktion nicht mehr voll erfüllen, würde in der Auswerteeinrichtung 30 womöglich ein "Fehler" ausgewertet, obwohl sonst alles in Ordnung ist, was zu höchst nachteiligen Folgen führen könnte. Um solche Nachteile zu vermeiden, ohne daß zusätzliche Überwachungsanordnungen für das Daten-Verarbeitungsaggregat 28 selbst verwendet werden müssen, ist parallel zu dem Signalweg P ein weiterer Signalweg I gelegt. In diesem parallelen weiteren Signalweg I ist ein weiteres Daten-Verarbeitungsaggregat 29 eingeschaltet, das jedoch ungleichartig zu dem ersten Daten-Verarbeitungsaggregat 28 ausgebildet ist mit dem Ergebnis, daß die auf dem weiteren Signalweg I entlanglaufenden Daten und Informationen anders als auf dem ersten Signalweg P verarbeitet oder anderweitig beeinflußt werden, was beispielsweise durch eine zeitliche Verschiebung mittels eines Laufzeitgliedes möglich wäre, so daß der Ausfall oder auch nur die Abschwächung einer der beiden Signalgruppen, die über die parallelen Signalwege P und I laufen, einen solchen Fehler erkennen läßt. Nach außen ist dieser weitere parallele Signalweg I mit dem zusätzlichen und anders als das erste Daten-Verarbeitungsaggregat 28 ausgebildete weitere Daten-Verarbeitungsaggregat 29 gar nicht ersichtlich, da beide in die Datenumformungseinrichtung 27 eingebaut sind, welche nunmehr das Verbindungsglied zwischen dem IST-Wert-Fühler 25 und der Auswerteeinrichtung 30 mit dem Mikrocomputer MC1 darstellt. Die Daten Pw, Iw gelangen über die 8bit-Eingänge zum Mikrocomputer MC1. Dort werden die Daten Pw, Iw, d.h. die von den IST-Werten abgeleiteten Daten miteinander vergleichen. Ist Gleichheit vorhanden, dann wird mit dem SOLL-Wert z.B. in einem Vergleicher (COMP) verglichen und wird bei Abweichung das Antriebsaggregat nachgeregelt. Der SOLL-Wert kann in einem SOLL-Wert-Speicher 31 gespeichert sein. In einer mit der Auswerteeinrichtung 30 verbundenen Anzeigevorrichtung können nun sowohl der IST-Wert der Drehzahl der Welle 23 als auch Abweichungen vom SOLL-Wert zur Darstellung gebracht werden.

Es empfiehlt sich, die Digitalsignale Pw und die Digitalsignale Iw an einen weiteren Mikrocomputer MC2 zu melden, der unabhängig vom ersten Mikrocomputer MC1 einen Vergleich der beiden Digitalsignale Pw, Iw vornimmt.

Bei dem bevorzugten Ausführungsbeispiel nach Fig. 2 ist gezeigt, wie der Mikrocomputer MC in einem Steueraggregat 2 einen pulsweitenmodulierte Steuersignale abgebenden Signalgeber PWM steuert. Diese Steuersignale bestimmen über die Steuerleitung C8 die Drehzahl des Antriebsaggregats D8 für das Gebläse 8 eines Brenners einer Heizungsanlage, welches den Druck der angesaugten Luft A erhöht auf den Druck der abgegebenen Luft A₁. Gleichzeitig stellt der hier als IST-Wert-Fühler 25 (nach Fig. 1) dienende Sensor S8 die tatsächliche Drehzahl des Antriebsaggregats D8 fest. Die beispielsweise durch HALL-Sonden entstehenden Digitalsignale werden über die Rückleitung R8 zum Steueraggregat 2 zurückgeleitet und dort hinter dem Eingangstransistor ET in zwei getrennte Signalwege P und I aufgeteilt. Der digitale Signalweg P führt zu einem Timer bzw. Zähler Td, dessen Ausgang an den Vergleicher COMP gelegt ist.

Vom Digitalsignalweg P zweigt ein RC-Glied ab, das die Aufgabe hat, die Digitalsignale P₁, P₂ zu Analogsignalen I₁ und I₂ umzuformen und über den analogen Signalweg I einem Analog-/Digitalwandler A/D zuzuführen, von dem aus wiederum Digitalsignale an den Vergleicher COMP gelangen, der mit dem Mikrocomputer MC in Verbindung steht.

Diese Digitalsignale P1, P2 und die integrierten Analogsignale I1, I2 sind in Fig. 3 mit P₁ und P₂ schematisch dargestellt.

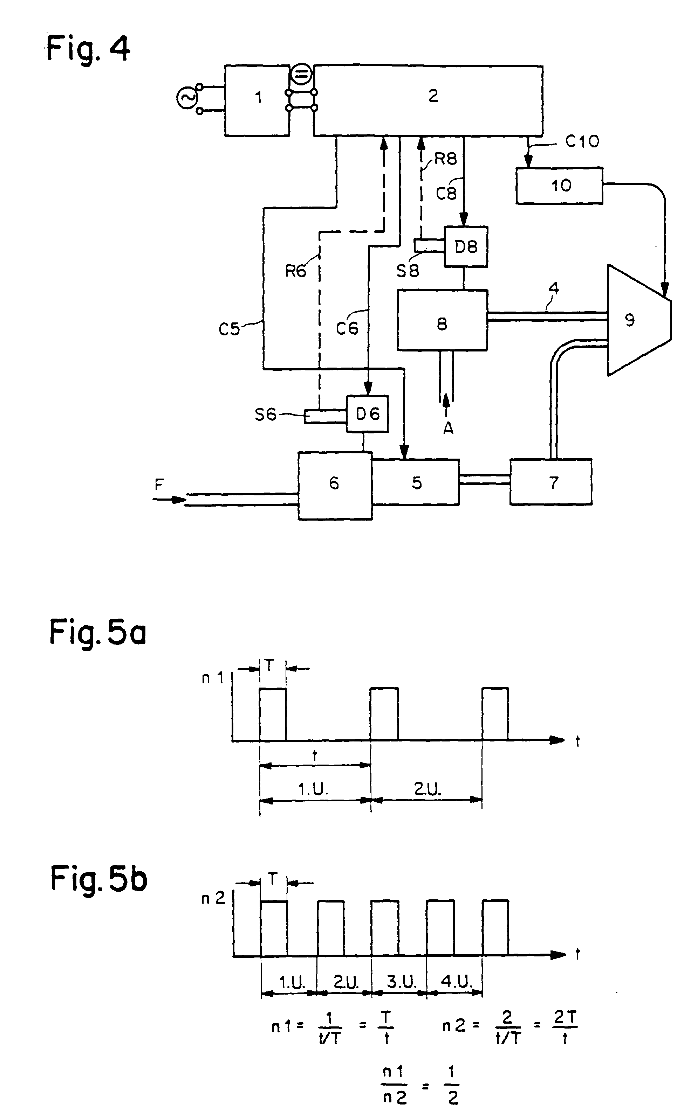

Diese Signalwegaufteilung in zwei getrennte und zwar unterschiedliche Signalwege P einerseits und I andererseits wird nach dem in Fig. 4 dargestellten Anwendungsbeispiel entsprechend auch für die IST-Wert-Signale von einem weiteren Sensor S6 angewendet, die über die Rückleitung R6 zum Steueraggregat 2 gelangen.

Gemäß Fig. 4 wird eine 230 V-Wechsel-Netzspannung in der Spannungsversorgung 1 auf 35 V-Niederspannung heruntertransformiert und zu einer Gleichspannung gleichgerichtet. Entsprechend ist die Spannungsversorgung 1 beispielsweise mit einem 50 VA-Transformator im Netzteil sowie einem Gleichrichter ausgerüstet. Das Steueraggregat 2 wird ggf. über Zwischenabgriffe von der Spannungsversorgung 1 gespeist. Die Brennstoffzuleitung 3 der Heizungsanlage, durch welche insbesondere Öl als Brennstoff F gefördert wird, führt ebenso wie die Luftzuleitung 4 für die Verbrennungsluft A zum Brenner 9. In der Ölzuleitung 3 sind zuerst die Ölpumpe 6, dann der Ölvorwärmer 5 und daran anschließend das Brennstoffventil 7 eingeschaltet, während in der Luftzuleitung 4 das Gebläse 8 eingeschaltet ist. Sowohl die Ölpumpe 6 als auch das Gebläse 8 sind mit eigenen Antriebsaggregaten D6 bzw. D8, beim vorliegenden Ausführungsbeispiel mit 35 V-Gleichstrommotoren ausgerüstet. Diese werden vom Steueraggregat 2 über die Steuerleitungen C6 und C8 gesteuert und mit Spannung versorgt, ebenso wie vom Steueraggregat 2 eine Steuerleitung C5 zum Ölvorwärmer 5 führt. Schließlich führt vom Steueraggregat 2 eine weitere Steuerleitung C10 zum Zündaggregat 10, das dazu dient, den aus dem Brenner 9 austretenden Strahl eines Öl-/Luft-Gemisches zu einem bestimmten Zeitpunkt zu entzünden, um die Verbrennung einzuleiten.

Die Antriebsaggregate D6 und D8 sind hier jeweils mit IST-Wert-Fühlern S6 bzw. S8 beispielsweise in Form von HALL-Sonden ausgerüstet, welche Impule konstanter Impulsbreite abgeben und die Aufgabe haben, die jeweilige Drehzahl der Antriebsmotoren D6, D8 festzustellen. Über Rückleitungen R6 und R8 werden diese IST-Wert-Signale an das Steueraggregat 2 geleitet und dort zur Überwachung und/oder Regelung gemäß der Erfindung weiterverarbeitet bzw. ausgewertet.

Es versteht sich, daß im Steueraggregat 2 mit dem Mikrocomputer MC1 auch Speicherelemente und solche elektrische bzw. elektronische Baugruppen angeordnet sein können, welche beispielsweise in Abhängigkeit von der Kesselwassertemperatur, Vorlauf- und/oder Rücklauftemperatur der Heizungsanlage, Raumtemperatur des zu beheizenden Raumen, Außentemperatur und dergleichen Steueraufgaben übernehmen und die Drehzahl des Gebläses 8 bzw. der Ölpumpe 6 erhöhen oder vermindern oder auf Null setzen, d.h. das betreffende Antriebsaggregat ganz ausschalten.

Anhand der Fig. 5 und 6 werden schematisch die unterschiedlichen Signalverarbeitungen erläutert und zwar bezeichnen n₁ die IST-Drehzahl des Antriebsaggregats D6 der Ölpumpe 6 und n₂ die IST-Drehzahl des Antriebsaggregats D8 des Lüfters bzw. Gebläses 8 von Fig. 4. Diese Drehzahlen werden über als HALL-Sonden ausgebildete IST-Wert-Fühler S6 und S8 detektiert. Sie liefern ein Impulsmuster (mit Impulsen konstanter Impulsbreite T) beispielsweise für die Drehzahl n₁ nach Fig. 5a und für die Drehzahl n₂ gemäß Fig. 5b, was einem Drehzahlverhältnis von 1:2 entspricht. Hieraus wird deutlich, daß die Drehzahl n₁ geringer als die Drehzahl n₂ ist, da pro Zeiteinheit t/T weniger Impulse als im Falle der Fig. 5b entstehen. Die digitalen Impulse können im digitalen Zähler Td über einen gewissen Zeitraum gezählt werden, den ein Taktgenerator bzw. Timer vorgibt. Sie können dann mit gespeicherten Werten verglichen werden, um die IST-Drehzahl anzugeben.

In den Fig. 6a und 6b sind in durchgezogenen Linien Impulse als entsprechende Impulsmuster dargestellt. Der zum digitalen Signalweg parallel geschaltete Signalweg nimmt dagegen eine integrierende Verarbeitung mittels eines Kondensators vor, und zwar bei diesem vergröberndem Beispiel beginnend nach stillstehendem Antrieb, da dann der Ausgangswert des abgeleiteten Analogsignals Null ist. Bei jedem Impuls findet eine gewisse Aufladung statt, so daß sich nach einer bestimmten Anzahl von Impulsen und Aufladungen ein analoger Wert für die Drehzahl n₁ gemäß Fig. 6a und für die Drehzahl n₂ gemäß Fig. 6b ergibt. Der sich dann einstellende quasikonstante Wert (in strichpunktierten Linien angedeutet) kann mit Hilfe eines Komparators, beispielsweise eines Operationsverstärkers, mit einem SOLL-Wert verglichen werden. In diesem Fall wäre dieser SOLL-Wert z.B. mit Hilfe eines RC-Gliedes aus dem Signal des Pulweitenmodulators PWM abzuleiten.

Treten gelegentlich Fehlimpulse als Störungen auf, werden diese bei der digitalen Verarbeitung voll mitgezählt und ergäben falsche Werte, während sie bei der analogen Verarbeitung unterdrückt bleiben. Störimpulse, wie sie in öffentlichen Stromversorgungen beispielsweise durch fehlerhaft entstörte Phasenanschnitts-Steuerungen auftreten, haben meist eine gegenüber den Nutzimpulsen der IST-Wert-Fühler S6 und S8 deutlich kleinere Impulsbreite. Deshalb sind die Auswirkungen solcher Störimpulse im analogen und im digitalen Zweig der Überwachungseinrichtungen unterschiedlich. Dadurch ergeben sich unterschiedliche Ergebnisse der Drehzahlmessung in den beiden Zweigen, was vom Steueraggregat 2 erkannt wird.

Gemäß Fig. 7a wurden durch optische Fühler (idealisiert) Rechtecksignale für helle Zonen und Lücken für dunkle Zonen für beide Drehzahlen n₁ und n₂ erzeugt. Gemäß Fig. 7b werden die Rechtecksignale der optischen Abtastung OA von Fig. 7a zu differenzierten Signalen DS differenziert. Sofern die Negativimpulse nicht blockiert werden, ist eine Gleichrichtung gemäß Fig. 7c zu gleichgerichteten Signalen GS erforderlich, die dann nach Integration ein Maß für die Drehzahlen n₁ bzw. n₂ in Form von Analogsignalen bilden.

Die Aufteilung in einen Signalweg P für digitale Signalverarbeitung und einen Signalweg I für analoge Signalverarbeitung führt in weiterer Ausbildung der Erfindung auch zu weiteren Vorteilen. Sofern sich aus der unterschiedlichen Signalverarbeitung längs dieser beiden Signalwege P, I unterschiedliche Werte für die Drehzahl ergeben, kann eine Gewichtung des einen gegenüber dem anderen Wert im Sinne eines "wahren" Werts bzw. eines fehlerhaften Wert und/oder eine sicherheitstechnische Steuerung insbesondere im Sinne einer Störabschaltung vorgenommen werden, wie dies noch im folgenden gezeigt wird.

Grundsätzlich kann bei unterschiedlichen Werten nicht eindeutig erkannt werden, welcher Wert der richtige, d.h. "wahre" ist. Wird einer der Werte als wahr angenommen und der Brenner läuft weiter, könnte auch der andere Signalweg defekt gehen, woraus sich folgende Fälle ergeben:
a) Der Wert des ersten defekten Signalwegs wurde als "wahr" angenommen: der Mikroprozessor regelt die Motordrehzahl nach, was zu einem nicht zulässigen Verbrennungsgemisch führt. Beim weiteren Ausfall des zweiten, vorher fehlerfreien Signalwegs ist kein Bezug zur IST-Drehzahl mehr möglich, da beide Kanäle defekt sind.
b) Der Wert des nicht defekten Signalwegs wurde als "wahr" angenommen: die Anlage läuft korrekt. Fällt jedoch jetzt auch dieser Signalweg aus, dann sind zwei defekte Signalwege vorhanden. Da nicht ausgeschlossen werden kann, daß die beiden defekten Signalwege auch gleiche Werte liefern, besteht die Gefahr, daß in diesem Fall der Mikroprocessor den Antriebsmotor auf die Werte der defekten Signalwege ausregelt, was wiederum zu einem unzulässigen Verbrennungsgemisch führte.

Um diesen Nachteilen zu begegnen, empfiehlt sich folgendes:

Da digitale Signalverarbeitungswege empfindlicher auf kurzzeitige hochfrequente Störsignale reagieren und daher leichter zu Fehlwerten führen, wird dann, wenn der digitale Signalweg einen größeren Drehzahlwert ergibt als der analoge Signalweg, der Meßwert des analogen Signalwegs als "wahrer" Wert angenommen. Ergibt einer der beiden Signalwege einen Meßwert "Null", was Stillstand des Antriebsaggregats bedeuten würde, der andere Signalweg aber einen von Null verschiedenen Wert, dann wird dies als Anzeichen für einen Defekt in diesem Signalweg verstanden. Eine Störabschaltung würde jedenfalls dann veranlaßt, wenn das Signal "Null" im digitalen Signalweg auftritt.

Wird eine Differenz der Drehzahl-Werte für den Gebläseantrieb festgestellt, wird grundsätzlich der niedrigere Drehzahl-Wert als wahrer Wert angenommen und zwar selbst dann, wenn einer der Drehzahl-Werte Null ist. Der Feuerungsautomat versucht dann, die Drehzahl zu erhöhen.

Wird dagegen beim Ölpumpenantrieb eine Differenz der Drehzahl-Werte zwischen den beiden Signalwegen festgestellt, wird zweckmäßigerweise der höhere Drehzahl-Wert als wahrer Wert vermutet.

Hierdurch wird in beiden Fällen eine sicherheitstechnische Maßnahme ergriffen, nämlich Luftmangel und daher die Bildung giftiger oder gar explosionsfähiger Abgase vermieden. Ein gewisser Luftüberschuß wird hier in Kauf genommen.

Bei Abweichung der Werte des einen Signalwegs vom Wert des anderen parallelen Signalwegs erfolgt daher nach sicherheitsrelevanten Kriterien eine bestimmte Reaktion.

## Patentansprüche

1. Elektrische Überwachungsanordnung mit einem IST-Wert-Fühler (S6, S8), der einen IST-Wert der zu überwachenden Vorrichtung abfühlt
und mit Signalwegen (P, I), auf denen dem IST-Wert entsprechende Signale zu Auswerteeinrichtungen entlanglaufen, welche die Signale auswerten,
**dadurch gekennzeichnet,**
daß die Signale über mindestens zwei parallele Signalwege (P, I) zu mindestens einer Auswerteeinrichtung (30) gelangen, daß die Signalwege (P, I) unterschiedliche Verarbeitungsaggregate (28, 29) aufweisen, die die Signale parallel verarbeiten und
daß mindestens eine Auswerteeinrichtung (30) die unterschiedlich verarbeiteten Signale vergleicht und auswertet.

2. Überwachungsanordnung nach Anspruch 1,
**dadurch gekennzeichnet,**
daß ein Signalweg (P) eine digitale und der andere Signalweg (I) eine analoge Signalverarbeitung vornimmt sowie digitale Signale (P₁, P₂, ..) einerseits bzw. analoge Signale (I₁, I₂, ..) andererseits weiterleitet.

3. Überwachungsanordnung nach Anspruch 2,
**dadurch gekennzeichnet,**
daß ein Zähler (T_{d}) drehzahlabhängige Digitalsignale (P₁, P₂, ..) zählt und ein Analog-/Digital-Wandler (A/D) drehzahlabhängige Analogsignale (I₁, I₂, ..) in Digitalsignale umwandelt.

4. Überwachungsanordnung nach Anspruch 2 oder 3,
**dadurch gekennzeichnet,**
daß vom Signalweg (P) für die Digitalsignale (P₁, P₂, ..) ein RC-Glied abzweigt, das die Digitalsignale (P₁, P₂, ..) durch Integration in Analogsignale (I₁, I₂, ..) umwandelt und in den Signalweg (I) für die Analogsignale (I₁, I₂, ..) einspeist.

5. Überwachungsanordnung nach einem der vorhergehenden Ansprüche,
**dadurch gekennzeichnet,**
daß der IST-Wert-Fühler (S6, S8) eine optische Abtastung eines helle und dunkle Bereiche gleicher Breite aufweisenden, mit der Drehzahl umlaufenden Ringes vornimmt und die Ausgangs-Signale des IST-Wert-Fühlers (S6, S8) differenziert werden, so daß bei jeder Flanke der Helligkeitssignale ein Impuls konstanter Impulsbreite entsteht.

6. Überwachungsanordnung nach einem der Ansprüche 1 bis 4,
**dadurch gekennzeichnet,**
daß eine HALL-Sonde als IST-Wert-Fühler (S6, S8) dient.

7. Überwachungsanordnung nach einem der vorhergehenden Ansprüche,
**dadurch gekennzeichnet,**
daß bei Nichtübereinstimmung des sich aus den Analogsignalen (I₁, I₂, ..) ergebenden Drehzahl-Werts mit dem sich aus den Digitalsignalen (P₁, P₂, ..) ergebenden Drehzahl-Wert der Wert der Analogsignale (I₁, I₂, ..) dann als der wahre Drehzahl-Wert dient, wenn die Digitalsignale (P₁, P₂, ..) einen höheren Wert als die Analogsignale (I₁, I₂, ..) ergeben.

8. Überwachungsanordnung nach einem der vorhergehenden Ansprüche,
**dadurch gekennzeichnet,**
daß eine Störabschaltung dann erfolgt, wenn ein über einen Signalweg sich ergebender Drehzahl-Wert Null ist, während der sich über den anderen Signalweg ergebende Drehzahl-Wert verschieden von Null ist.

9. Verwendung der Überwachungseinrichtung nach einem der vorhergehenden Ansprüche bei einer Steuereinrichtung (2) für Brenner von Heizungsanlagen und dergleichen mit der Maßgabe, daß ein IST-Wert-Fühler (S6) als Drehzahlfühler eines Antriebsaggregats (D6) für die Ölpumpe (6) und ein weiterer IST-Wert-Fühler (S8) als Drehzahlfühler eines zweiten, vom ersten Antriebsaggregat (D6) getrennten Antriebsaggregats (D8) für das Gebläse (8) ausgebildet sind.

10. Verwendung der Überwachungseinrichtung nach Anspruch 9,
gekennzeichnet durch
die Integration in eine Steuereinrichtung (2), welche die Antriebsaggregate (D6, D8) pulsweitenmoduliert steuert, mit der Maßgabe, daß die Überwachungseinrichtung zur Regelung von pulsweitenmodulierten Steuersignalen (C6, C8) für die Antriebsaggregate (D6, D8) verwendet wird.

11. Verwendung nach Anspruch 9 oder 10 mit der Maßgabe, daß bei unterschiedlichen Drehzahl-Werten für das Gebläse (8) zwischen dem digitalen Signalweg (P) und dem analogen Signalweg (I) der niedrigere Drehzahl-Wert als der wahre Wert dient.

12. Verwendung nach einem der Ansprüche 9 - 11 mit der Maßgabe, daß bei unterschiedlichen Drehzahl-Werten für die Ölpumpe (6) zwischen dem digitalen Signalweg (P) und dem analogen Signalweg (I) der höhere Drehzahl-Wert als der wahre Wert dient.

13. Verwendung nach Anspruch 11 oder 12 mit der Maßgabe, daß bei Überschreiten eines vorbestimmten Differenzwerts zwischen den Drehzahl-Werten beider Signalwege (P, I) eine Störabschaltung erfolgt.

## Claims

1. An electrical monitoring arrangement comprising an actual value sensor (S6, S8) which senses an actual value of the apparatus to be monitored and signal paths (P, I) along which signals corresponding to the actual value pass to evaluating devices which evaluate the signals, characterised in that the signals pass by way of at least two parallel signal paths (P, I) to at least one evaluating device (30), that the signal paths (P, I) have different processing units (28, 29) which process the signals in parallel, and that at least one evaluating device (30) compares and evaluates the differently processed signals.

2. A monitoring arrangement according to claim 1 characterised in that one signal path (P) effects digital signal processing and the other signal path (I) effects analog signal processing and the signal paths conduct digital signals (P₁,P₂ ..) on the one hand and analog signals (I₁, I₂, ..) on the other hand respectively.

3. A monitoring arrangement according to claim 2 characterised in that a counter (T_{d}) counts digital signals (P₁, P₂, ..) which are dependent on speed of rotation and an analog/digital converter (A/D) converts analog signals (I₁, I₂, ..) which are dependent on speed of rotation into digital signals.

4. A monitoring arrangement according to claim 2 or claim 3 characterised in that an RC-arrangement branches off the signal path (P) for the digital signals (P₁, P₂, ..), converts the digital signals (P₁, P₂, ..) into analog signals (I₁, I₂,..) by integration and feeds them into the signal path (I) for the analog signals (I₁, I₂, ..).

5. A monitoring arrangement according to one of the preceding claims characterised in that the actual value sensor (S6, S8) effects optical scanning of a ring which has light and dark regions of equal width and which rotates at the speed of rotation and the output signals of the actual value sensor (S6, S8) are differentiated so that a pulse of constant pulse width is produced at each edge of the brightness signals.

6. A monitoring arrangement according to one of claims 1 to 4 characterised in that a Hall probe serves as the actual value sensor (S6, S8).

7. A monitoring arrangement according to one of the preceding claims characterised in that, if the value in respect of the speed of rotation which is produced from the analog signals (I₁, I₂) is not the same as the value in respect of the speed of rotation which is produced from the digital signals (P₁, P₂, ..), the value of the analog signals (I₁, I₂) serves as the true value in respect of the speed of rotation when the digital signals (P₁, P₂, ..) give a higher value than the analog signals (I₁, I₂, ..).

8. A monitoring arrangement according to one of the preceding claims characterised in that fault shut-down occurs when a value in respect of the speed of rotation which is produced by way of one signal path is zero while the value in respect of the speed of rotation which is produced by way of the other signal path is different from zero.

9. Use of the monitoring arrangement according to one of the preceding claims in a control device (2) for burners of heating installations and the like on the condition that an actual value sensor (S6) is in the form of a rotary speed sensor of a drive unit (D6) for the oil pump (6) and a further actual value sensor (S8) is in the form of a rotary speed sensor of a second drive unit (D8) for the blower (8), the second drive unit being separate from the first drive unit (D6).

10. Use of a monitoring arrangement according to claim 9 characterised by integration into a control device (2) which provides for pulse width-modulated control of the drive units (D6, D8), on the condition that the monitoring arrangement is used for regulating pulse width-modulated control signals (C6, C8) for the drive units (D6, D8).

11. Use according to claim 9 or claim 10 on the condition that with different values in respect of speed of rotation for the blower (8) between the digital signal path (P) and the analog signal path (I) the lower value in respect of speed of rotation serves as the true value.

12. Use according to one of claims 9 - 11 on the condition that with different values with respect to speed of rotation for the oil pump (6) between the digital signal path (P) and the analog signal path (I) the higher value in respect of speed of rotation serves as the true value.

13. Use according to claim 11 or claim 12 on the condition that fault shut-down occurs when a predetermined difference between the values in respect of speed of rotation of the two signal paths (P, I) is exceeded.

## Revendications

1. Dispositif de surveillance électrique comportant un capteur de valeur réelle (S6,S8) qui détecte une valeur réelle du dispositif à surveiller, et comportant des voies (P,I) de transmission de signaux, dans lesquelles des signaux correspondant à la valeur réelle circulent en direction de dispositifs d'évaluation, qui évaluent les signaux,
caractérisé en ce
que les signaux parviennent par l'intermédiaire d'au moins deux voies parallèles (P,I) de transmission de signaux à au moins un dispositif d'évaluation (30),
que les voies (P,I) de transmission de signaux possèdent des unités différentes de traitement (28,29) qui traitent partiellement les signaux, et
qu'au moins un dispositif d'évaluation (30) compare et évalue les signaux traités différemment.

2. Dispositif de surveillance selon la revendication 1, caractérisé en ce
qu'une voie (P) de transmission de signaux exécute un traitement numérique des signaux et l'autre voie (I) de transmission de signaux exécute un traitement analogique des signaux et que ces voies de transmission de signaux retransmettent d'une part des signaux numériques (P₁, P₂, ...) et d'autre part des signaux analogiques (i₁, I₂, ...).

3. Dispositif de surveillance selon la revendication 2, caractérisé en ce qu'un compteur (T_{d}) compte des signaux numériques (P₁, P₂, ...) qui dépendent de la vitesse de rotation et qu'un convertisseur analogique / numérique (A/D) convertit des signaux analogiques (I₁, I₂, ...) qui dépendent de la vitesse de rotation, en des signaux numériques.

4. Dispositif de surveillance selon la revendication 2 ou 3, caractérisé en ce
qu'à partir de la voie (P) de transmission de signaux pour les signaux numériques (P₁, P₂, ...) s'étend en dérivation un circuit (RC), qui convertit les signaux numériques (P₁, P₂, *...*) par intégration des signaux analogiques (I₁, I₂ ...) et les introduit dans la voie (I) de transmission de signaux pour les signaux analogiques (I₁, I₂, ...).

5. Dispositif de surveillance selon l'une des revendications précédentes, caractérisé en ce
que le capteur de valeurs réelles (S6, S8) réalise une exploration optique par balayage d'un anneau qui comporte des zones claires et sombres de même largeur et tourne à la vitesse de rotation et que les signaux de sortie du capteur de valeur réelle (S6,S8) sont différentiés de sorte qu'une impulsion ayant une largeur constante apparaît lors de l'apparition de chaque flanc des signaux de luminosité.

6. Dispositif de surveillance selon l'une des revendications 1 à 4, caractérisé en ce qu'une sonde de Hall est utilisée comme capteur de valeur réelle (S6,S8).

7. Dispositif de surveillance selon l'une des revendications précédentes, caractérisé en ce
qu'en cas de non coïncidence entre la valeur de la vitesse de rotation obtenue à partir des signaux analogiques (I₁, I₂, ...) et la valeur de la vitesse de rotation obtenue à partir des signaux numériques (P₁, P₂, ...), la valeur des signaux analogiques (I₁, I₂, ...) est utilisée en tant que valeur vraie de la vitesse de rotation lorsque les signaux numériques (P₁, P₂, ...) fournissent une valeur plus élevée que les signaux analogiques (I₁, I₂ ...).

8. Dispositif de contrôle selon l'une des revendications précédentes, caractérisé en ce
qu'une suppression du parasitage est exécutée lorsqu'une valeur de la vitesse de rotation obtenue par l'intermédiaire d'une voie de transmission de signaux est nulle, alors que la valeur de la vitesse de rotation obtenue par l'intermédiaire de l'autre voie de transmission de signaux est différente de zéro.

9. Utilisation du dispositif de surveillance selon l'une des revendications précédentes, dans un dispositif de commande (2) pour des brûleurs d'installations de chauffage et analogues, avec la disposition selon laquelle un capteur de valeur réelle (S6) est agencé sous la forme d'un capteur de vitesse de rotation d'une unité d'entraînement (D6) pour la pompe à mazout (6) et qu'un autre capteur de valeur réelle (S8) est agencé en tant que capteur de la vitesse de rotation d'une seconde unité d'entraînement (D8) prévue pour le ventilateur (8) et qui est séparée de la première unité d'entraînement (D6).

10. Utilisation du dispositif de surveillance selon la revendication 9, caractérisée par
l'intégration dans un dispositif de commande (2), qui commande les unités d'entraînement (D6, D8) d'une manière modulée selon une modulation d'impulsions en durée, avec la disposition selon laquelle le dispositif de surveillance est utilisé pour régler des signaux de commande (C6, C8) modulés selon une modulation d'impulsion en durée pour les unités d'entraînement (D6, D8).

11. Utilisation selon la revendication 9 ou 10 avec la disposition selon laquelle, dans le cas de valeurs différentes de la vitesse de rotation pour le ventilateur (8) entre la voie numérique (P) de transmission de signaux et la voie logique (I) de transmission de signaux, la valeur inférieure de la vitesse de rotation est utilisée en tant que valeur vraie.

12. Utilisation selon l'une des revendications 9 à 11 avec la disposition selon laquelle, dans le cas de valeurs différentes de la vitesse de rotation pour la pompe à huile (6) entre la voie numérique (P) de transmission de signaux et la voie analogique (I) de transmission de signaux, la valeur la plus élevée de la vitesse de rotation est utilisée en tant que valeur vraie.

13. Utilisation selon la revendication 11 ou 12, avec la disposition selon laquelle en cas de dépassement d'une valeur de différence prédéterminée entre les valeurs de la vitesse de rotation des voies (P,I) de transmission de signaux, une suppression du parasitage est mise en oeuvre.
